(19) Europäisches Patentamt
European Patent Office
Office européen des brevets

(11) Publication number: **0 311 008 A2**

(12) # EUROPEAN PATENT APPLICATION

(21) Application number: 88116391.9

(22) Date of filing: 04.10.88

(51) Int. Cl.4: C08L 69/00 , //(C08L69/00, 101:00)

(30) Priority: 07.10.87 JP 253119/87
30.10.87 JP 273419/87
02.11.87 JP 277774/87
19.11.87 JP 290750/87
25.11.87 JP 296402/87
08.12.87 JP 308525/87
05.08.88 JP 194345/88

(43) Date of publication of application: 12.04.89 Bulletin 89/15

(84) Designated Contracting States: BE CH DE FR GB IT LI NL SE

(71) Applicant: IDEMITSU PETROCHEMICAL CO. LTD.
1-1, Marunouchi 3-chome Chiyoda-ku
Tokyo(JP)

(72) Inventor: Hashimoto, Kazuto Idemitsu Petrochemical Co.,Ltd.
1-1, Anesaki-kaigan
Ichiharashi Chiba-ken(JP)
Inventor: Komatsu, Takashi Idemitsu Petrochemical Co.,Ltd.
1-1, Anesaki-kaigan
Ichiharashi Chiba-ken(JP)

(74) Representative: Türk, Gille, Hrabal
Bruckner Strasse 20
D-4000 Düsseldorf 13(DE)

(54) **Polycarbonate resin composition.**

(57) A polycarbonate resin composition containing, as major components, a novel polycarbonate resin and thermoplastic resin. The thermoplastic resin includes styrene-based resin, polyamide resin, polyolefin resin, fluorine resin, rubber-like elastomer, aromatic polycarbonate resin, and thermoplastic polyester resin. The novel polycarbonate resin has a repeating unit (I) of the formula (A) shown below and a repeating unit (II) of the formula (B) shown below, a pentahalogenophenoxy group at the terminal thereof, and a viscosity average molecular weight of at least 5,000.

EP 0 311 008 A2

Xerox Copy Centre

Formula (A)

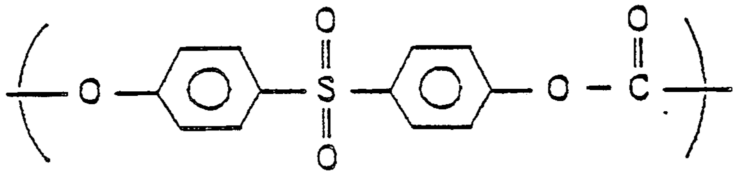
· · (A)

Formula (B)

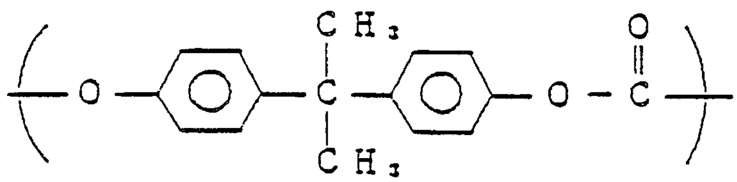
· · (B)

# POLYCARBONATE RESIN COMPOSITION

## BACKGROUND OF THE INVENTION

### 1. Field of the Invention

The present invention relates to a polycarbonate resin composition and more particularly to a polycarbonate resin composition comprising a novel polycarbonate resin and a thermoplastic resin, such as a styrene-based resin, a polyamide resin, a polyolefin resin, a fluorine resin, a rubber-like elastomer, an aromatic polycarbonate resin and a thermoplastic polyester resin.

### 2. Description of Related Art

Various flame retardant polycarbonate resins exemplified by a polycarbonate resin having a halogen-substituted phenoxy group (e.g., a pentabromophenoxy group, a tetrachlorophenoxy group, and a tribromophenoxy group) at the terminal thereof (Japanese Patent Publication No. 40715/1971) have heretofore been known.

Conventional flame retardant polycarbonate resins, however, are not sufficiently satisfactory in properties such as mechanical properties (e.g., impact resistance) and fluidity, although they are excellent in flame retardance.

The present inventors have succeeded in developing a polycarbonate resin having a novel structure which is greatly improved in flame retardance while maintaining their original mechanical and optical properties.

This novel polycarbonate resin, however, is somewhat poor in moldability because of its high melting viscosity, and in some cases, depending on the type of an organic solvent, they are subject to stress cracking

## SUMMARY OF THE INVENTION

The present invention is intended to overcome the above problems, and its major object is to provide a polycarbonate resin composition which is excellent in flame retardance, fluidity and solvent resistance as well as mechanical properties.

The present invention provides a polycarbonate resin composition comprising a polycarbonate resin having a novel structure and a thermoplastic resin such as a styrene-based resin, a polyamide resin, a polyolefin resin, a fluorine resin, a rubber-like elastomer, an aromatic polycarbonate resin, and a thermoplastic polyester resin.

## DESCRIPTION OF PREFERRED EMBODIMENTS

The polycarbonate resin to be used in the polycarbonate resin composition of the present invention is a polycarbonate resin having a repeating unit (I) represented by the formula (A):

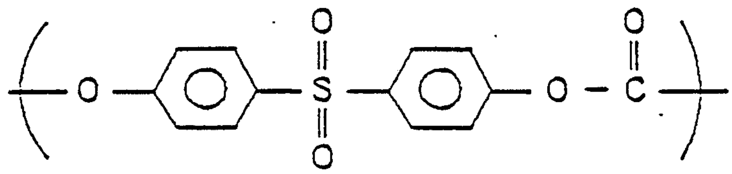

· · · (A)

and a repeating unit (II) represented by the formula (B):

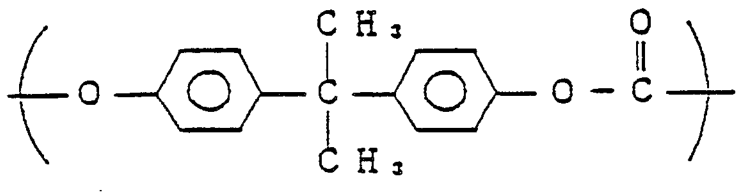

· · (B)

;

a pentahalogenophenoxy group at the terminal thereof; and a viscosity average molecular weight of at least 5,000.

The mole fraction of the repeating unit (I) or the repeating unit (II) is not critical and is determined appropriately depending on the purpose of use of the polycarbonate resin composition and so forth. Usually, assuming that the mole fraction of the repeating unit (I) is m and the mole fraction of the repeating unit (II) is n, $m/m+n$ is 0.005/1 to 0.2/1, with the range of 0.01/1 to 0.1/1 being preferred.

In the polycarbonate resin, the pentahalogenophenoxy group, i.e., a functional group represented by the general formula (C):

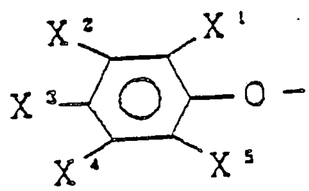

· · · (C)

(wherein $X^1$ to $X^5$ may be the same or different and are each a halogen atom) is bonded at the terminal of the molecule, particularly at both terminals thereof.

The viscosity average molecular weight of the polycarbonate resin is suitably at least 5,000, with the range of 10,000 to 30,000 being preferred. If the viscosity average molecular weight is less than 5,000, mechanical strength such as impact resistance is poor.

The polycarbonate resin may be any of random copolymers, block copolymers, alternating copolymers and so on.

The polycarbonate resin may contain a small amount of a repeating unit or units other than the repeating units (I) and (II) in the molecular chain thereof.

The polycarbonate resin can be produced by various methods. Two typical methods are described below in detail. (1) Bisphenolsulfone (BPS) having the formula (A'):

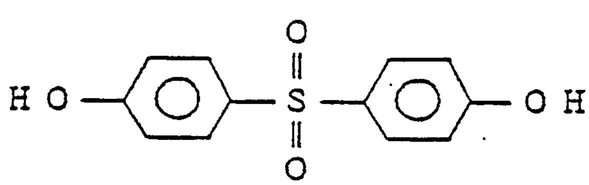

··· (A')

bisphenol A (BPA) having the formula (B'):

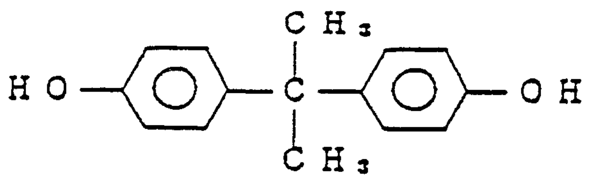

... (B'),

pentahalogenophenol (e.g., pentabromophenol, pentachlorophenol, and pentafluorophenol) represented by the general formula (C′):

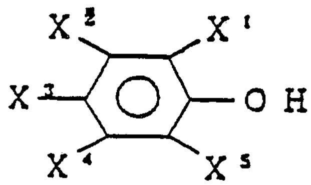

... (C'),

a solvent (e.g., methylene chloride, chlorobenzene, pyridine, chloroform, and carbon tetrachloride), and an aqueous alkali solution mutually insoluble with the above solvent (e.g., an aqueous solution of sodium hydroxide, potassium hydroxide, or sodium carbonate) are mixed in a predetermined ratio and stirred, and then phosgene is blown into the mixture to perform interfacial polymerization. The reaction system is preferably cooled with water or ice because the reaction is exothermic. It is also preferable that the pH of the reaction system be maintained at 10 or more by adding an alkali while measuring with a pH meter since the reaction system becomes acidic as the reaction proceeds.

The bisphenolsulfone of the formula (A′) constitutes the repeating unit (I) of the polycarbonate resin, and the bisphenol A of the formula (B′), the repeating unit (II). Thus the supplied amount ratio of the bisphenolsulfon to the bisphenol A is determined depending on the mole fraction of the repeating unit (I) or the repeating unit (II) in the polycarbonate resin.

The amounts of pentahalogenophenol and phosgene charged specify the degree of polymerization of each of the repeating units (I) and (II), or the degree of polymerization of the polycarbonate resin, or the molecular weight of the polycarbonate resin. Thus the amounts of pentahalogenophenol and phosgene used are determined appropriately taking into consideration the molecular weight of the final polycarbonate resin.

In blowing phosgene, the amount of phosgene blown per hour is controlled so that the total amount of phosgene blown until the reaction is completed is equal to the necessary amount of phosgene to be supplied.

The polycarbonate resin is precipitated by introducing the reaction mixture as obtained above in a large amount of a precipitating agent (e.g., methanol).

In the above reaction, various carbonate-forming derivatives such as bromophosgene, diphenyl carbonate, di-p-tolyl carbonate, phenyl p-tolylcarbonate, di-p-chlorophenyl carbonate, dinaphthyl carbonate, and the like can be used in place of phosgene. (2) A polycarbonate oligomer is first prepared from bisphenol A and phosgene.

The above polycarbonate oligomer, bisphenolsulfone, pentahalogenophenol, a solvent capable of dissolving the polycarbonate oligomer (e.g., methylene chloride), an aqueous solution of alkali (e.g., an aqueous solution of sodium hydroxide), and such compounds as triethylamine and trimethylbenzylammonium chloride are combined in a predetermined ratio and mixed. The reaction mixture is then poured into a large amount of a precipitating agent (e.g., methanol) to precipitate the desired polycarbonate resin.

By this method, the polymer grows through the reaction between the chloroformate group existing at both ends of the oligomer and the hydroxyl group existing at the end of the bisphenolsulfone. Therefore, it is unnecessary to blow phosgene at this stage.

In the polycarbonate resin produced by the above method, the degree of polymerization of the oligomer is to the same degree of polymerization as the bonded member of the repeating unit (II), one repeating unit (I) is present between the bonded members of the repeating unit (II); and the pentahalogenophenoxy group is bonded at the terminal thereof.

The polycarbonate resin composition of the present invention comprises the above polycarbonate resin and a thermoplastic resin. Various kinds of thermoplastic resins can be used as the thermoplastic resin in the composition. Among the thermoplastic resins, preferably used in the present invention are one or more resins selected from styrene-based resin, polyamide resin, polyolefin resin, fluorine resin, rubber-like elastomer, aromatic polycarbonate resin, and thermoplastic polyester resin.

STYRENE-BASED RESIN

Styrene-based resins which can be used in the present invention include general-purpose polystyrene resin (GPPS), high impact resistant polystyrene resin (HIPS), styrene-maleic anhydride copolymer (SMA), ABS resin, AS resin, AAS resin, ACS resin, and the like.

Examples of the general-purpose polystyrene resin (GPPS) are polymers of styrene, α-methylstyrene, vinyltoluene, 2,4-dimethylstyrene, chlorostyrene, and other substituted monovinyl aromatic monomers.

High impact resistant polystyrene resin (HIPS) is a polymer with a soft component dispersed therein, obtained by dissolving or mixing a rubber-like elastomer in a monovinyl aromatic monomer, and then polymerizing them. Polybutadiene is particularly preferred.as the rubber-like elastomer. In addition, an acrylate and/or methacrylate- containing rubber-like elastomer, a SBS resin, an ABS resin, an AS resin, a SBR resin, a butadiene-acryl rubber, an isoprene rubber, an isoprene-styrene rubber, an isoprene- acryl rubber, an ethylene-propylene rubber, and the like are also preferred. The polybutadiene as used herein may be low cis-polybutadiene (e.g., containing 1 to 30 mol% of a 1,2-vinyl bond and 30 to 42 mol% of a 1,4-cis bond), or high cis-polybutadiene (e.g., containing 20 mol% of a 1,2-vinyl bond and 78 mol% of a 1,4-cis bond), or a mixture thereof. Specific examples of the acrylate and/or methacrylate-containing rubber-like elastomer are a MAS resin (graft copolymer of 60 to 80% of n-butylacrylate, and styrene and methyl methacrylate), an MS resin (methyl methacrylate- styrene copolymer), an MABS resin (copolymer obtained by polymerizing octyl acrylate and butadiene in a weight ratio of 7:3 to form a rubber latex, and graft polymerizing styrene and methyl methacrylate onto the rubber latex), an MBS resin (polymer obtained by copolymerizing methyl methacrylate and butadiene to form a rubber latex, and then graft polymerizing styrene onto the rubber latex), and the like.

In the styrene-maleic anhydride copolymer (SMA), the ratio of the styrene unit to the maleic anhydride unit can be varied within a wide range, and the molecular weight can also be chosen from a wide range. SMA can generally be produced by reacting maleic anhydride and styrene at an elevated temperature in the presence of a peroxide catalyst (see U.S. Patents 2,866,771 and 2,971,939). In place of styrene, α-methylstyrene, vinyltoluene, 2,4-dimethylstyrene, chlorostyrene, and other substituted styrene derivatives can be used. The molecular weight can be chosen from a wide range. For example, the molecular weight is chosen preferably from 20,000 to 300,000 and more preferably from about 80,000 to 200,000. The maleic anhydride content of SMA is preferably 5 to 50% by weight, more preferably 5 tp 30% by weight, and moct preferably 8 to 15% by weight. SMA may be obtained by heat polymerizing styrene and maleic anhydride using a rubber component in the presence of a chain transfer agent and a radical generator. Typical examples of the rubber components are a butadiene rubber, butadiene-styrene rubber or butadiene-acryl rubber containing 60 to 95% by weight of butadiene, isoprene rubber, isoprene-styrene rubber or isoprene-acryl rubber containing 60 to 95% by weight of isoprene, A-B type block rubber or A-B-A type block rubber of butadiene and styrene containing 60 to 95% by weight of butadiene ethylene-propylene copolymer rubber, and the like. These can be used alone or in combination with one another. Of these, rubber-modified SMA containing 2 to 25% by weight, preferably 5 to 12% by weight of the rubber component is preferred.

As the styrene-based resin, as well as GPPS, HIPS, and SMA, an ABS resin, an AS resin, an AAS resin, an ACS resin, and the like can be used.

The polycarbonate resin composition of the present invention, in one embodiment thereof, contains the polycarbonate resin and the styrene-based resin as described above as the major components. The ratio of the polycarbonate resin to the styrene-based resin is determined appropriately depending on the type of each component, the purpose of use of the polycarbonate resin composition, and so forth. In general, the proportion of the polycarbonate resin is 1 to 99% by weight but preferably 35 to 95% by weight, and the proportion of the styrene-based resin is 99 to 1% by weight but preferably 65 to 5% by weight.

The polycarbonate resin composition containing the polycarbonate resin and the styrene-based resin as the major components is greatly improved in fluidity while maintaining good mechanical strength characteristic of polycarbonate, and further is excellent in flame retardance.

## POLYAMIDE RESIN

Polyamide resins which can be used in the present invention include open-ring polymer of lactam, polycondensate of diamine and dibasic acid, polycondensate of ω-amino acid, and the like. Mixtures of these polymers or their copolymers can also be used. Representative examples are Nylon-6, Nylon-66, Nylon-6•66, Nylon-6•10, Nylon-6•12, Nylon-11, Nylon-12 and the like.

The polycarbonate resin composition of the present invention, in another embodiment thereof, contains the polycarbonate resin and the polyamide resin as described above as the major components. The ratio of the polycarbonate resin to the polyamide resin is determined appropriately depending on the type of each component, the purpose of use of the polycarbonate resin composition, and so forth. In general, the proportion of the polycarbonate resin is 30 to 99% by weight but preferably 50 to 95% by weight, and the proportion of the polyamide resin is 70 to 1% by weight and preferably 50 to 5% by weight. If the proportion of the polycarbonate resin is more than 99% by weight, the resulting composition does not have sufficiently high fluidity and solvent resistance. On the other hand, if it is less than 30% by weight, impact resistance is reduced.

The polycarbonate resin composition containing the polycarbonate resin and the polyamide resin as the major components is greatly improved in fluidity and solvent resistance while maintaining good mechanical strength characteristic of polycarbonate, and further is excellent in flame retardance.

## POLYOLEFIN RESIN

Polyolefin resins which can be used in the present invention include homopolymers of α-olefins such as ethylene, propylene, butene-1, isobutene-1, pentene-1, 3-methylbutene-1, 4-methylpentene-1, hexene-1, octene-1 and the like, copolymers of two or more of the above α -olefins, and copolymers of at least 70 mol%, preferably at least 80 mol% of the above α-olefin and not more than 30 mol%, preferably not more than 20 mol% of a vinyl compound (e.g., vinylesters such as vinyl acetate and vinyl halide such as vinyl chloride), unsaturated carboxylic acid (e.g., acrylic acid, methacrylic acid, and maleic acid), unsaturated carboxylic acid ester (e.g., methyl acrylate, ethyl acrylate, methyl methacrylate, and ethyl methacrylate), and the like. More specifically, low density polyethylene, linear low density polyethylene, high density polyethylene, isotactic polypropylene, atactic polypropylene, an ethylene-propylene copolymer, an ethylene-vinyl acetate copolymer or its saponified product, an ethylene-methyl methacrylate copolymer, and ethylene-ethyl acrylate copolymer, an ethylene-methyl methacrylate copolymer, and the like can be used.

The polycarbonate resin composition of the present invention, in another embodiment thereof, contains the polycarbonate resin and the polyolefin resin as the major components. The ratio of the polycarbonate resin to the polyolefin resin is determined appropriately depending on the type of each component, the purpose of use of the polycarbonate resin composition, and so forth. In general, the proportion of the polycarbonate resin is 50 to 99% by weight but preferably 70 to 95% by weight, and the proportion of the polyolefin resin is 50 to 1% by weight but preferably 30 to 5% by weight. If the proportion of the polycarbonate resin is more than 99% by weight, the resulting composition does not have sufficiently high fluidity and solvent resistance. On the other hand, if it is less than 50% by weight, mechanical strength and heat resistance are reduced.

The polycarbonate resin composition containing the polycarbonate resin and the polyolefin resin as the major components is greatly improved in fluidity and solvent resistance while maintaining good mechanical strength character istic thereof, and further is excellent in flame retardance.

## FLUORINE RESIN

Any resins containing a fluorine atom in the molecule thereof can be used as the fluorine resin. Among these resins, those containing a carbon-fluorine bond in the molecule thereof, e.g., polytetrafluoroethylene, polychlorotrifluoroethylene, polyvinyl fluoride, polyvinylidene fluoride, a hexafluoropropylene-tetrafluoroethylene copolymer, a chlorotrifluoroethylene- vinylidene fluoride copolymer, and the like are preferred. Most preferred is polytetrafluoroethylene with a melting point of 300 to 350 °C.

The polycarbonate resin composition of the present invention, in another embodiment thereof, contains the polycarbonate resin and the fluorine resin as the major components. The ratio of the polycarbonate resin to the fluorine resin is determined appropriately depending on the type of each component, the purpose of use of the polycarbonate resin composition, and so forth. In general, the proportion of the

polycarbonate resin is 60 to 99% by weight but preferably 70 to 95% by weight, and the proportion of the fluorine resin is 40 to 1% by weight and preferably 30 to 5% by weight. If the proportion of the polycarbonate resin is more than 99% by weight, the resulting composition does not have sufficiently satisfactory wear resistance and sliding characteristics. On the other hand, if it is less than 60% by weight, impact resistance is reduced, and flow marks are readily formed in a molding.

The polycarbonate resin composition containing the polycarbonate resin and the fluorine resin as the major component is greatly improved in wear resistance and sliding characteristics while maintaining good mechanical strength characteristic of polycarbonate, and further is excellent in flame retardance.

## RUBBER-LIKE ELASTOMER

The rubber-like elastomer to be used in the present invention is not critical, and various rubber-like elastomers can be used depending on the purpose of use of the composition, and so forth. For example, natural rubber (NR); diene-based rubber, e.g., styrene-butadiene rubber (SBR), polybutadiene rubber (BR), isoprene rubber (IR), acrylonitrile-butadiene (NBR), acrylonitrile-isoprene rubber (NIR), chloroprene rubber (CR) and the like; olefin-based rubber, e.g., isobutylene-isoprene rubber (IIR), ethylene-propylene rubber (EPM), ethylene-propylene-diene (EPDM), chlorosulfonated polyethylene rubber (CSM), ethylene-vinyl acetate rubber (EVM), and the like; acryl-based rubber, organic silicon compound-based rubber, organic fluorine compound-based rubber, urethane rubber, ether rubber, and so forth can be used.

The acryl-based rubber includes resinous polymers (1) and (2) described below.

(1) Resinous polymers prepared by polymerizing one or more vinyl monomers in the presence of rubber-like polymers made mainly from alkyl acrylate and/or alkyl methacrylate. Typical examples of the resinous polymers are MAS resinous elastomers such as a graft copolymer comprising 60 to 80 wt% of n-butyl acrylate, and styrene and methyl methacrylate, and MS resinous elastomer which is a copolymer of styrene and methyl methacrylate. These MAS resinous elastomers are commercially available, and typical examples are "KM-330" (trade name, produced by Rhome & Haas Co.) and "W529" (trade name, produced by Mitsubishi Rayon Co., Ltd.).

(2) Resinous polymers prepared by the steps of copolymerizing alkyl acrylate and/or alkyl methacrylate and a polyfunctional polymerizable monomer having a conjugated diene-type double bond to prepare copolymers, and of graft polymerizing one or more vinyl monomers to the copolymers.

More specifically, MABS resinous elastomers such as a graft copolymer prepared by the steps of copolymerizing octyl acrylate and butadiene (7:3) to prepare a rubber latex and of adding styrene and methyl methacrylate to the rubber latex and graft copolymerizing, and MBS resinous elastomers such as a graft copolymer prepared by the steps of copolymerizing methyl methacrylate and butadiene to prepare a rubber latex and of adding styrene to the rubber latex and graft polymerizing are suitable.

These MABS resinous elastomers are commercially available, and "HIA 15","HIA 28" and "HIA 30" (trade names, produced by Kureha Kagaku Kogyo Co., Ltd.) are preferably used.

The polycarbonate resin composition of the present invention, in another embodiment thereof, contains the polycarbonate resin and the rubber-like elastomer as the major components. The ratio of the polycarbonate resin to the rubber-like elastomer is determined appropriately depending on the type of each component, the purpose of use of the composition, and so forth. The proportion of the polycarbonate resin is 40 to 99% by weight but preferably 60 to 99% by weight, and the proportion of the rubber-like elastomer is 60 to 1% by weight but preferably 40 to 1% by weight. If the proportion of the polycarbonate resin is more than 99% by weight, the resulting composition does not have sufficiently high impact resistance in low temperature and fluidity. On the other hand, if it is less than 40% by weight,mechanical strength is reduced and flow marks are readily formed in a molding.

The polycarbonate resin composition containing the polycarbonate resin and the rubber-like elastomer as the major components is greatly improved in fluidity and impact resistance while maintaining good mechanical strength characteristics of polycarbonate, and further is excellent in flame retardance.

## AR0MATIC POLYCARBONATE RESIN

The aromatic polycarbonate resin to be used in the present invention is derived from bisphenol A and more specifically an aromatic polycarbonate resin obtained by reacting bisphenol A and a carbonate-forming compound (e.g., phosgene, bromophosgene, diphenyl carbonate, di-p-tolyl carbonate, di-p-chlorophenyl carbonate, dinaphthyl carbonate, and the like), in which the main chain comprises the repeating unit (I) represented by the general formula (B) as described hereinbefore. The viscosity average molecular weight of the aromatic polycarbonate resin is not critical and is determined appropriately depending on the purpose of use of the composition to be prepared, and characteristics to be required. Commercially available aromatic polycarbonate resins can be used in the present invention.

The polycarbonate resin composition of the present invention, in another embodiment thereof, contains the polycarbonate resin and the aromatic polycarbonate resin as the major components. The proportion of the polycarbonate resin is 1 to 99% by weight but preferably 10 to 90% by weight, and the proportion of the aromatic polycarbonate resin derived from bisphenol A is 99 to 1% by weight but preferably 90 to 10% by weight. If the proportion of the polycarbonate resin is less than 1% by weight, flame retardance and fluidity characteristics are insufficient.

The polycarbonate resin composition containing the polycarbonate resin and the aromatic polycarbonate resin is excellent in flame retardance and further in fluidity and impact resistance.

## THERMOPLASTIC POLYESTER RESIN

Various thermoplastic polyesters can be used in the present invention. In particular, polyester resin obtained by the polycondensation of a di-functional carboxylic acid component and an alkylene glycol component is suitable.

Preferred examples of thermoplastic polyester resin are polyethylene phthalate and polybutylene terephthalate.

Thermoplastic polyester resin can be produced by the usual method in the presence or absence of polycondensation catalyst containing titanium, germanium, antimony and the like.

For example, polyethylene terephthalate is produced by subjecting terephthalic acid and ethylene glycol to esterification reaction, or by the two-stage polymerization method consisting of the first step in which lower alkyl terephthalate, e.g., dimethyl terephthalate and ethylene glycol are subjected to ester exchange to produce the glycol ester of terephthalic acid and/or its low molecular weight polymer, and of the second step in which glycol ester and/or its low molecular weight polymer is further polymerized to produce a polymer having a higher degree of polymerization.

Examples of the di-functional carboxylic acid component are aromatic dicarboxylic acids such as terephthalic acid, isophthalic acid, naphthalene dicarboxylic acid, and the like.

Among these aromatic dicarboxylic acids, terephthalic acid is preferred. Other di-functional carboxylic acids can be used within the range that does not deteriorate the effects of the present invention.

Examples of di-functional carboxylic acids which can be used in combination are aliphatic dicarboxylic acids such as oxalic acid, malonic acid, adipic acid, suberic acid, azelaic acid, sebacic acid, decadicarboxylic acid and the like, and their ester-forming derivatives.

The proportion of the other dicarboxylic acid blended should generally be not more than 20 mol% of the total dicarboxylic acid component.

As the alkylene glycol component, for example, aliphatic diols having 2 to 15 carbon atoms, such as ethylene glycol, propylene-1,2-glycol, propylene-1,3-glycol, buthylene-1,4-glycol, butylene-2,3-glycol, hexane-1,6-diol, octane-1,8-diol, neopentyl glycol, and decane-1,10-diol, and the like can be used.

Of these glycols, ethylene glycol and butylene glycol are suitable.

The polycarbonate resin composition of the present invention, in another embodiment thereof, contains the polycarbonate resin and the thermoplastic polyester resin as the major components. The proportion of the polycarbonate resin is 1 to 99% by weight, preferably 30 to 98% by weight, but more preferably 50 to 95% by weight. Proportionally, the proportion of the thermoplastic polyester resin is 99 to 1% by weight, preferably 70 to 2% by weight, but more preferably 50 to 5% by weight. If the proportion of the polycarbonate resin is more than 99% by weight, the final polycarbonate resin composition is not improved in fluidity. On the other hand, if it is less than 1% by weight, mechanical properties are reduced.

The polycarbonate resin composition containing the polycarbonate resin and the thermoplastic polyester resin as the major components is improved in fluidity, solvent resistance and flame retardance without deteriorating mechanical properties characteristic of polycarbonate.

To the polycarbonate resin composition of the present invention, containing the polycarbonate resin and the styrene-based resin, the polyamide resin, the polyolefin resin, the fluorine resin, the rubber-like elastomer, the aromatic polycarbonate resin or the thermoplastic polyester resin as the major components, various additives such as an inorganic filler and the like, and a synthetic resin and so on can be added, if necessary, within the range that does not deteriorate the effects of the present invention. Addition of a flame

retardant increases the flame retardance of the polycarbonate resin composition.

As the inorganic filler to be blended for the purpose of increasing the mechanical strength, durability or volume of the polycarbonate resin composition of the present invention, for example, glass fiber, glass bease, glass flake, carbon black, calcium sulfate, calcium carbonate, silica, asbestos, talc, clay, mica, and quartz powder can be used.

Antioxidants, e.g., hindered phenol, phosphorus (e.g., phosphite and phosphate), and amine-based antioxidants; ultraviolet ray absorber, e.g., benzotriazole and benzophenone-based ultraviolet ray absorbers; external lubricants, e.g., aliphatic carboxylate and paraffin-based lubricants; releasing agents; antistatic agents; colorants; and so forth can also be added.

BHT (2,6di-tert-butyl-p-cresol), IRGANOX 1076 and IRGANOX 1010 (trade name, produced by Ciba Geigy Corp.), Ethyl 330 (trade name, produced by Ethyl Corp.), Sumilizer GM (trade name, produced by Sumitomo Chemical Co., Ltd.), and the like are preferably used as the above hindered phenol-based antioxidant.

Flame retardants which can be used include tetrabromobisphenol A (TBA), polycarbonate oligomer obtained by reacting TBA and phosgene, decabromobisphenol A, brominated epoxy compound, and the like. In addition, auxiliary flame retardants, $Sb_2O_3$, sodium antimonate, and the like can be used.

Various glass fiber can be blended in for the purpose of increasing mechanical strength, durability or the volume of the polycarbonate resin composition of the present invention. For example, glass fibers conventionally used for resin reinforcement, such as alkali-containing glass fiber, low alkali content glass fiber, alkali-free glass fiber, and the like can be used. Glass fiber is not critical in the form thereof and may be any of robing, chopped strand, strand, milled fiber and the like. If the fiber diameter is too large, the resulting composition may have reduced strength and poor appearance. On the other hand, if the fiber diameter is too small, the fiber may be cut orshredded at the time of kneading or molding, leading to a decrease in the strength of the composition. In order to more increase the flame retardance and mechanical strength of the polycarbonate resin composition, the glass fiber may be subjected to a surface treatment using a coupling agent, e.g., aminosilane, epoxysilane, borane, vinylsilane, and methacrylsilane-based coupling agents, or a chromium complex compound, a boron compound and the like. Of these glass fibers, those having a fiber length of 1 to 8 mm, specifically 2 to 7 mm, and a fiber diameter of not more than 20 µm, specifically 3 to 15 µm, and further subjected to a surface treatment using a silane coupling agent and preferred.

The amount of the glass fiber blended is not critical and can be determined appropriately depending on the purpose of use of the polycarbonate resin composition, desired characteristics and so forth. For example, in the case of the polycarbonate resin composition containing the polycarbonate resin and the rubber-like elastomer as the major components, the amount of the glass fiber blended is 1 to 40 parts by weight, preferably 5 to 30 parts by weight per 100 parts by weight of the sum of the polycarbonate resin and the rubber-like elastomer. Addition of a suitable amount of glass fiber increases flame retardance, stiffness, and dimensional stability. If, however, the glass fiber is added in an excessively large amount, fluidity is undesirably decreased.

The polycarbonate resin composition of the present invention is prepared by blending and kneading the aforementioned components by the usual method, such as by the use of a ribbon blender, a Henschel mixer, a Vanbury mixer, a drum tumbler, a single-screw extruder, a twin-screw extruder, a multi-screw extruder and the like.

The heating temperature in kneading is usually 250 to 300 °C.

The polycarbonate resin composition of the present invention can be molded by various known molding methods such as injection molding, extrusion molding, compression molding, calender molding, rotary molding and the like to produce moldings for cars, e.g., bumpers, and moldings for domestic electric appliances.

The present invention is described in greater detail with reference to the following examples.

<u>Preparation Example</u>

(Preparation of Polycarbonate Oligomer of Bisphenol A)

In to a 2-liter flask equipped with a stirrer were introduced 91 g of bisphenol A, 330 ml of methylene chloride and 560 ml of a 1.7 N aqueous solution of sodium hydroxide, and phosgene was blown thereinto for 70 minutes while stirring and cooling the resulting mixture on a water bath. On allowing the reaction

mixture to stand at room temperature, a methylene chloride solution of oligomer was separated as a lower layer. The concentration of the oligomer in the oligomer solution was 300 g/ℓ the number average molecular weight of the oligomer was 550, and the concentration of the chloroformate group was 1.0 mol/ℓ

Production Example 1 (Production of Polycarbonate)

In to a 50-liter reactor equipped with a stirrer were introduced 8 ℓ of the oligomer as prepared in the Preparation Example described above, 640 ml of an aqueous alkali solution of bisphenolsulfone (consisting of 123 g (0.49 mol) of bisphenolsulfone, 69 g of sodium hydroxide and 520 ml of water), and 4.4 g (0.043 mol) of triethylamine, which were then stirred at 500 rpm. After ten minutes, an aqueous alkali solution of pentabromophenol (consisting of 230 g (0.47 mol) of pentabromophenol, 37.6 g of sodium hydroxide and 2.8 ℓ of water) was added, and the resulting mixture was stirred. After 50 minutes, 4.9 ℓ of an aqueous alkali solution of bisphenol A (consisting of 510 g (2.24 mol) of bisphenol A, 260 g of sodium hydroxide and 4.4 ℓ of water) and 6 ℓ of methylene chloride were added, and the resulting mixture was stirred.

After stirring for 60 minutes, the reaction mixture was separated into an aqueous layer and a methylene chloride layer containing the copolymer formed above (polycarbonate consisting of the repeating unit (I) and the repeating unit (II)).

This methylene chloride layer was washed with water, an acid (0.1 N hydrochloric acid) and then with water. The methylene chloride was distilled away under reduced pressure at 40 °C to obtain a white powder of the copolymer. This white copolymer powder was dried at 120 °C for one day and night, and then melted in an extruder and pelletized. The glass transition temperature (Tg) of the pellets was 154.2 °C. The viscosity average molecular weight of the copolymer was 18,800. The molecular weight distribution of the copolymer as determined by gel permeation chromatography was such that a single peak appeared at the above value.

The mole fraction of the repeating unit (I) in the copolymer was determined and found to be 0.024. Subsequently the pellets were injection-molded by an injection-molder at the temperature of 280 °C under an injection pressure of 56 $kg/cm^2$ to obtain a test piece. The Izod impact strength and the flame retardance of the test piece were measured.

The transparency of the test piece was visually determined. The flow value of the pellets was measured by Koka type flow tester. The bromine content of the copolymer was 6.2 wt%. (The bromine content was determined by alkali decomposing and analyzing the asmple by the Volhard method.) Hereinafter the polycarbonate obtained here shall be referred to as PC-1.

Production Example 2 (Production of Polycarbonate)

In to a 50-liter reactor equipped with a stirrer were introduced 8 ℓ of the oligomer as prepared in the Preparation Example described above, 640 ml of an aqueous alkali solution of bisphenolsulfone (consisting of 123 g (0.49 mol) of bisphenolsulfone, 69 g of sodium hydroxide and 520 mol of water), and 4.4 g (0.043 mol) of triethylamine, which were then stirred at 500 rpm. After ten minutes, an aqueous alkali solution of pentabromophenol (consisting of 215 g (0.44 mol) of pentabromophenol, 35.1 g of sodium hydroxide and 2.8 ℓ of water) was added, and the resulting mixture was stirred. After 50 minutes, 4.9 ℓ of an aqueous alkali solution of bispheno. A (consisting of 510 g (2.24 mol) of bisphenol A, 260 g of sodium hydroxide and 4.4 ℓ of water) and 6 ℓ of methylene chloride were added, and the resulting mixture was stirred.

After stirring for 60 minutes, the reaction mixture was separated into an aqueous layer and a methylene chloride layer containing the copolymer formed above (polycarbonate containing the repeating unit (I) and the repeating unit (II)).

This methylene chloride layer was washed with water, an acid (0.1 N hydrochloric acid) and then with water. The methylene chloride was distilled away under reduced pressure at 40 °C to obtain a white powder of the copolymer. This white copolymer powder was dried at 120 °C for one day and night, and then melted in an extruder and pelletized. The glass transition temperature (Tg) of the pellets was 153.8 °C. The viscosity average molecular weight of the copolymer was 17,600. The molecular weight distribution of the copolymer as determined by gel permeation chromatography was such that a single peak appeared at the above value.

The mole fraction of the repeating unit (I) in the copolymer was determined and found to be 0.02. The bromine content of the copolymer was 5.8 wt%. (The bromine content was determined by alkali decomposing and analyzing the sample by the Volhard method.) Thereinafter the polycarbonate obtained here shall

be referred to as PC-2.

Examples 1 to 8 and Comparative Examples 1 to 4

Each of the polycarbonates shown in Table 1 and the styrene-based resins each in prescribed amount was dried, then chip-blended, supplied into an extruder, and kneaded at a molding temperature of 250°C. The compositions thus obtained were pelletized.

The pellets thus obtained were dried, and injection-molded to obtain test pieces.

The tensile strength, Izod impact strength, and flame retardance of the test pieces were measured. The flow value of the pellets was measured. The results are shown in Table 1.

Table 1

| Run No. | Polycarbonate Kind | Polycarbonate Amount Blended (wt%) | Styrene-based Resin Kind | Styrene-based Resin Amount Blended (wt%) | Evaluation: Tensile Strength *7 ($kg/cm^2$) | Evaluation: Izod *8 Impact Strength ($kg \cdot cm/cm^2$) | Evaluation: Flow *9 Value (ml/sec) | Evaluation: Flame Retardance *10 |
|---|---|---|---|---|---|---|---|---|
| Example 1 | PC-1 | 50 | ABS*2 | 50 | 520 | 70 | $34 \times 10^{-2}$ | V-2 |
| Example 2 | PC-1 | 70 | ABS | 30 | 530 | 75 | $20 \times 10^{-2}$ | V-2 |
| Example 3 | PC-2 | 50 | ABS | 50 | 510 | 65 | $40 \times 10^{-2}$ | V-2 |
| Example 4 | PC-1 | 60 | HISMA*3 | 40 | 520 | 80 | $45 \times 10^{-2}$ | V-2 |
| Example 5 | PC-1 | 40 | HISMA | 60 | 450 | 55 | $60 \times 10^{-2}$ | V-2 |
| Example 6 | PC-2 | 80 | GPSMA*4 | 20 | 600 | 75 | $20 \times 10^{-2}$ | V-2 |
| Example 7 | PC-1 | 90 | GPPS*5 | 10 | 630 | 75 | $20 \times 10^{-2}$ | V-2 |
| Example 8 | PC-2 | 90 | HIPS*6 | 10 | 600 | 80 | $18 \times 10^{-2}$ | V-2 |
| Comparative Example 1 | PC-3*1 | 100 | - | - | 790 | 90 | $5.9 \times 10^{-2}$ | V-2 |
| Comparative Example 2 | PC-1 | 100 | - | - | 700 | 76 | $6.4 \times 10^{-2}$ | V-0 |
| Comparative Example 3 | PC-3 | 50 | ABS | 50 | 500 | 75 | $30 \times 10^{-2}$ | HB |
| Comparative Example 4 | PC-3 | 60 | HISMA | 40 | 530 | 85 | $38 \times 10^{-2}$ | HB |

*1 Toughlon A-2200 (polycarbonate produced from bisphenol A and phosgene) manufactured by Idemitsu Petrochemical Co., Ltd.

*2 ABS resin consisting of 70 parts by weight of ABS DP611 and 30 parts by weight of AS 290 NF manufactured by Japan Synthetic Rubber Co., Ltd.

*3 DYLARK D-250 (high impact resistant copolymer of styrene and maleic anhydride) manufactured by Atlantic Richfield Co., Ltd., USA.

*4 MOREMAX UG-430 (copolymer of styrene and maleic anhydride) manufactured by Idemitsu Petrochemical Co., Ltd.

*5 Idemitsu Styrol HH 30 (for general purpose polystyrene)

*6 Idemitsu Styrol HT 52 (high impact resistant polystyrene)

*7 According to JIS K-7113

*8 According to ASTM D-256, thickness: 3.2 mm; temperature at measurement: 23°C

*9 According to JIS K-7210, temperature at measurement: 280°C

*10 According to UL 94 (thickness: 3.2 mm)

Example 9

Ninety parts by weight of the composition obtained in Example 1 and 10 parts by weight of glass fibers (Trade name : MA 409°C, fiber length : 6 mm; fiber diameter : 13 μm, manufactured by Asahi Fiber Glass Co., Ltd.) were blended, and physical properties of the composition were measured in the same manner as in Examples 1 to 8. The tensile strength was 1050 kg/cm$^2$, the Izod impact strength was 12 kg cm/cm. The flow value was 20 x $10^{-2}$ml/second, and the flame retardance was V-2.

Example 10

A hundred parts by weight of the composition obtained in Example 2 and 0.5 parts by weight of a lubricant (stearic acid monoglyceride, trade name : Rikemal 100 A, manufactured by Riken Vitamin Co.,

Ltd.) were blended, and physical properties of the composition were measured in the same manner as in Examples 1 to 8. The tensile strength was 520 kg/cm$^2$, the Izod impact strength was 70 kg cm/cm, the flow value was 25 x $10^{-2}$ ml/second, and the flame retardance was V-2.

Example 11

A hundred parts by weight of the composition obtained in Example 4 was blended with 5 parts by weight of flame retarder (polycarbonate oligomer produced from TBA and phosgene, trade name : BC-58, manufactured by Great Lakes Ltd.) The physical properties were measured in the same manner as in Examples 1 to 8. The tensile strength was 500 kg/cm$^2$, the Izod impact strength was 60 kg•cm/cm, the flow value was 50 x $10^{-2}$ml/second, and the flame retardance was V-0.

Examples 12 to 16 and Comparative Examples 5 to 8

The polycarbonate resins obtained in the above Production Examples and the thermoplastic polyester resins (PE) each in the prescribed amount were dried, chip-blended, supplied to an extruder, and kneaded at the temperature of 270° C. The resulting composition was pelletized.

The pellets thus obtained were dried at 120° C for 12 hours, then injection-molded at a die temperature of 80° C to obtain test pieces.

Tensile strength, inflammability and solvent resistance of the test pieces were measured, and the flow value of the pellets was measured.

The results are shown in Table 2.

Table 2

| Run No. | Polycarbonate Kind | Polycarbonate Amount Blended (wt%) | Polyester Kind | Polyester Amount Blended (wt%) | Evaluation Tensile Strength ($kg/cm^2$) | Evaluation Solvent Resistance *5 | Evaluation Flow Value (ml/sec) *6 | Evaluation Flame Retardance *7 |
|---|---|---|---|---|---|---|---|---|
| Example 12 | PC-1 *1 | 90 | PET *3 | 10 | 630 | 0.3 | 8.0 | V-0 |
| Example 13 | PC-1 | 70 | " | 30 | 620 | 0.5 | 10.5 | V-0 |
| Example 14 | PC-1 | 50 | " | 50 | 600 | 0.7 | 15.0 | V-0 |
| Example 15 | PC-1 | 80 | PBT *4 | 20 | 640 | 0.6 | 20.0 | V-0 |
| Example 16 | PC-1 | 60 | " | 40 | 650 | 0.8 | 23.5 | V-2 |
| Comparative Example 5 | PC-1 | 100 | - | - | 660 | 0.2 | 6.4 | v-0 |
| Comparative Example 6 | PC-3 *2 | 100 | - | - | 650 | 0.2 | 5.9 | V-2 |
| Comparative Example 7 | PC-3 | 70 | PET | 30 | 620 | 0.5 | 10.0 | HB |
| Comparative Example 8 | PC-3 | 80 | PBT | 20 | 640 | 0.6 | 19.0 | HB |

*1 Polycarbonate obtained in the above described Production Example 1

*2 Toughlon A-2200 (polycarbonate produced from bisphenol A) manufactured by Idemitsu Petrochemical Co., Ltd.

*3 DIANITE MA523 (polyethylene terephtalate, intrinsic viscosity : 0.73 dl/g) manufactured by Mitsubishi Rayon Co., Ltd.

*4 DURANEX 2002 (polybutyrene terephtalate, intrinsic viscosity : 1.06 dl/g) manufactured by Polyplastics Co., Ltd.

*5 Critical strain according to the 1/4 oval method (described in Nakatsuji et al "Shikizai", vol.39, page 455 (1966)), solvent : mixture of toluene (40% by volume) and isooctane (60% by volume)

*6 According to JIS K-7210

*7 According to UL 94 (1/16 inch in thickness)

Examples 17 to 24 and Comparative Examples 9 to 12

The polycarbonate resins and polyamide resins shown in Table 3 each in the prescribed amount were dried, chip-blended, supplied to an extruder, and kneaded at the temperature of 270 °C. The resulting composition was pelletized.

The pellets thus obtained were dried at 120 °C for 12 hours, then injection-molded at a molding temperature of 270 °C and a die temperature of 80 °C to obtain test pieces.

Tensile strength, flame retardance and solvent resistance of the test pieces were measured, and the flow value of the pellets were measured.

The results are shown in Table 3.

Table 3

| Run No. | Polycarbonate Kind | Polycarbonate Amount Blended (wt%) | Polyamide resin Kind | Polyamide resin Amount Blended (wt%) | Other additives Kind | Other additives Amount Blended (wt%) *7 | Evaluation: Tensile Strength (kg/cm²) *8 | Evaluation: Solvent resistance *9 | Evaluation: Flow Value (ml/sec) *10 | Evaluation: Flame Retardance *11 |
|---|---|---|---|---|---|---|---|---|---|---|
| EXample 17 | PC-1 | 90 | PA6 *2 | 10 | - | - | 670 | 0.35 | $10.0 \times 10^{-2}$ | V-0 |
| Example 18 | PC-1 | 70 | PA6 | 30 | - | - | 690 | 0.80 | $15.0 \times 10^{-2}$ | V-2 |
| Example 19 | PC-2 | 50 | PA6 | 50 | - | - | 700 | 1 < | $23.0 \times 10^{-2}$ | V-2 |
| Example 20 | PC-1 | 80 | PA66 *3 | 20 | - | - | 680 | 0.60 | $12.0 \times 10^{-2}$ | V-0 |
| Example 21 | PC-2 | 70 | PA66 | 30 | - | - | 690 | 0.80 | $14.5 \times 10^{-2}$ | V-2 |
| Example 22 | PC-1 | 70 | PA6 | 30 | GF *4 | 10 | 1050 | 0.80 | $10.5 \times 10^{-2}$ | V-0 |
| Example 23 | PC-2 | 95 | PA66 | 5 | Lubricant *5 | 0.5 | 660 | 0.30 | $9.5 \times 10^{-2}$ | V-0 |
| Example 24 | PC-1 | 60 | PA6 | 40 | Flame retarder *6 | 5 | 700 | 1 < | $15.5 \times 10^{-2}$ | V-0 |
| Comparative Example 9 | PC-3 *1 | 100 | - | - | - | - | 650 | 0.2 | $5.9 \times 10^{-2}$ | V-2 |
| Comparative Example 10 | PC-1 | 100 | - | - | - | - | 660 | 0.2 | $6.4 \times 10^{-2}$ | V-0 |
| Comparative Example 11 | PC-3 | 70 | PA6 | 30 | - | - | 680 | 0.80 | $14.0 \times 10^{-2}$ | HB |
| Comparative Example 12 | PC-2 | 20 | PA66 | 80 | - | - | 730 | 1 < | $55.0 \times 10^{-2}$ | HB |

- 36 -

*1 Toughlon A-2200 (polycarbonate produced from bisphenol A and phosgene) manufactured by Idemitsu Petrochemical Co., ltd.

*2 Ube Nylon 1013 manufactured by Ube Industries, Ltd.

*3 Ube Nylon 2020 manufactured by Ube Industries, Ltd.

*4 MA409C (glass fiber, diameter : 13μ; length: 3 mm) manufactured by Asahi Glass Fiber Co., Ltd.

*5 Stearic acid monoglyceride (Rikemal S100A manufactured by Riken Vitamin Co., Ltd.)

*6 Polycarbonate oligomer produced from TBA and phosgene (BC-58 manufactured by Great Lakes, Ltd.)

*7 Shown by parts by weight to 100 parts by weight in total amount of polycarbonate and polyamide resins.

*8 According to JIS K-7113

*9 Critical strain according to the 1/4 oval method described in Nakatsuji et al "Shikizai" vol.39, Page 455 (1966), solvent : mixture of toluene (40% by volume) and isooctane (60% by volume)

*10 According to JIS K-7210, measurement temperature : 280°C

*11 According to UL 94 (3.2 mm in thickness)

Examples 25 to 35 and Comparative Examples 13 to 16

The polycarbonate resins and polyolefin resins and other additives shown in Table 4 each in the prescribed amount were prekneaded in a drum tumbler, supplied to an extruder, and kneaded at the temperature of 280° C. The resulting polycarbonate composition was pelletized.

The pellets thus obtained were injection-molded at a molding temperature of 280° C and at a die temperature of 80° C to obtain test pieces.

The test pieces were measured for tensile strength, flame retardance and solvent resistance, and the flow value of the pellets was measured.

The results are shown in Table 4.

Table 4

| Run No. | Polycarbonate | | Polyolefin resin | | Other additives | | Evaluation | | | |
|---|---|---|---|---|---|---|---|---|---|---|
| | Kind | Amount Blended (wt%) | Kind | Amount Blended (wt%) | Kind | Amount Blended *8 | Tensile Strength *9 (kg/cm$^2$) | Solvent Resistance *10 | Flow Value *11 (ml/sec) | Flame Retardance *12 |
| EXample 25 | PC-1 | 90 | HDPE *2 | 10 | - | - | 550 | 0.45 | $12.0 \times 10^{-2}$ | V-0 |
| Example 26 | PC-1 | 80 | HDPE | 20 | - | - | 500 | 0.65 | $14.5 \times 10^{-2}$ | V-2 |
| Example 27 | PC-1 | 70 | HDPE | 30 | - | - | 460 | 1 < | $17.5 \times 10^{-2}$ | V-2 |
| Example 28 | PC-2 | 90 | HDPE | 10 | - | - | 540 | 0.42 | $13.5 \times 10^{-2}$ | V-0 |
| Example 29 | PC-2 | 80 | PP *3 | 20 | - | - | 520 | 0.70 | $16.5 \times 10^{-2}$ | V-2 |
| Example 30 | PC-1 | 95 | PP | 5 | - | - | 580 | 0.38 | $14.0 \times 10^{-2}$ | V-0 |
| Example 31 | PC-2 | 80 | LLDPE *4 | 20 | - | - | 420 | 0.60 | $20.0 \times 10^{-2}$ | V-2 |
| Example 32 | PC-1 | 90 | LLDPE | 10 | - | - | 480 | 0.43 | $16.0 \times 10^{-2}$ | V-0 |
| Example 33 | PC-1 | 85 | HDPE | 15 | GF *5 | 10 | 980 | 0.48 | $10.5 \times 10^{-2}$ | V-0 |
| Example 34 | PC-2 | 95 | LLDPE | 5 | Lubricant *6 | 0.5 | 520 | 0.36 | $16.5 \times 10^{-2}$ | V-0 |
| Example 35 | PC-1 | 70 | PP | 30 | Flame *7 retarder | 5 | 490 | 1 < | $18.0 \times 10^{-2}$ | V-0 |
| Comparative Example 13 | PC-3 *1 | 100 | - | - | - | - | 650 | 0.2 | $5.9 \times 10^{-2}$ | V-2 |
| Comparative Example 14 | PC-1 | 100 | - | - | - | - | 660 | 0.2 | $6.4 \times 10^{-2}$ | V-0 |
| Comparative Example 15 | PC-3 | 90 | HDPE | 10 | - | - | 540 | 0.39 | $9.0 \times 10^{-2}$ | HB |
| Comparative Example 16 | PC-1 | 30 | PP | 70 | - | - | 420 | 1 < | $65.0 \times 10^{-2}$ | HB |

*1 Toughlon A-2200 (polycarbonate produced from bisphenol A and phosgene) manufactured by Idemitsu Petrochemical Co., ltd.

*2 Idemitsu Polyethylene 640UF manufactured by Idemitsu Petrochemical Co., Ltd.

*3 Idemitsu Polypro E100G manufactured by Idemitsu Petrochemical Co., Ltd.

*4 Idemitsu Polyethylene L 0134H manufactured by Idemitsu Petrochemical Co., Ltd.

*5 MA409C (glass fiber having diameter of 13μ , and length of 3 mm) manufactured by Asahi Fiber Glass Co., Ltd.

*6 Stearic acid monoglyceride (Rikemal S100A manufactured by Riken Vitamin)

*7 Polycarbonate oligomer produced from TBA and phosgene (BC-58 manufactured by Great Lakes, ltd.)

*8 Shown by parts by weight to 100 parts by weight in total amount of polycarbonate and polyolefin resins

*9 According to JIS K-7113

*10 Critical strain according to the 1/4 oval method described in Nakatsuji et al "Shikizai" vol.39, Page 455 (1966), solvent : mixture of toluene (40% by volume) and isooctane (60% by volume)

*11 According to JIS K-7210, measurement temperature : 280°C

*12 According to UL 94 (1/16 inch in thickness)

Examples 36 to 42 and Comparative Examples 17 to 20

The polycarbonate resins and fluorine resins and other additives such as glass fiber each in the prescribed amount were prekneaded in a drum tumbler, supplied into an extruder, and kneaded the temperature of 300° C. The resulting polycarbonate resin composition was pelletized.

The pellets thus obtained were injection-molded at a molding temperature of 300 °C, and at a die temperature of 80 °C to obtain test pieces.

The test pieces were measured for tensile strength, flame retardance and kinematic friction coefficient, and the flow value of the pellets was also measured.

The results are shown in Table 5.

Table 5

| Run No. | Polycarbonate Kind | Polycarbonate Amount Blended (wt%) | Fluorine Resin Kind | Fluorine Resin Amount Blended (wt%) | Other Additives Kind | Other Additives Amount Blended *6 | Evaluation: Flame Retardance *7 | Evaluation: Kinematic Friction Coefficient *8 | Evaluation: Modulus of Elasticity *9 | Appearance *10 |
|---|---|---|---|---|---|---|---|---|---|---|
| Example 36 | PC-1 | 70 | PTFE *2 | 30 | - | - | V-0 | 0.42 | 22000 | Good |
| Example 37 | PC-2 | 80 | PTFE | 20 | - | - | V-0 | 0.46 | 25000 | Good |
| Example 38 | PC-1 | 90 | PTFE | 10 | - | - | V-0 | 0.69 | 25500 | Good |
| Example 39 | PC-1 | 80 | PTFE | 20 | GF *3 | 10 | V-0 | 0.55 | 42000 | Good |
| Example 40 | PC-2 | 70 | PTFE | 30 | GF | 30 | V-0 | 0.44 | 80000 | Good |
| Example 41 | PC-1 | 80 | PTFE | 20 | Lubricant *4 | 0.5 | V-0 | 0.45 | 25000 | Good |
| Example 42 | PC-2 | 90 | PTFE | 10 | Flame *5 | 3 | V-0 | 0.70 | 26000 | Good |
| Comparative Example 17 | PC-3 *1 | 100 | - | - | - | - | V-2 | 1.05 | 26000 | Good |
| Comparative Example 18 | PC-3 | 80 | PTFE | 20 | - | - | V-2 | 0.46 | 25000 | Good |
| Comparative Example 19 | PC-1 | 99.5 | PTFE | 0.5 | - | - | V-0 | 0.94 | 26000 | Good |
| Comparative Example 20 | PC-2 | 55 | PTFE | 45 | - | - | V-0 | 0.30 | 14000 | Flow mark |

*1 Toughlon A-2200 (polycarbonate produced from bisphenol A and phosgene) manufactured by Idemitsu Petrochemical Co., Ltd.

*2 TLP-10F-1 (polytetrafluoroethylene, melting point; 327°C)

*3 MA4090 (glass fiber having a diameter of 13μ , and length of 3 mm) manufactured by Asahi Fiber Glass Co., Ltd.

*4 Rikemal S100A (Stearic acid monoglyceride) manufactured by Riken Vitamin Co., Ltd.

*5 BC-58 (polycarbonate oligomer produced from TBA and phosgene) manufactured by Great Lakes, Ltd.

*6 Shown by parts by weight to 100 parts by weight in total amount of polycarbonate and fluorine resins

*7 According to UL 94 (3.2 mm in thickness)

*8 According to ASTM D 1894, load: 2.0 kg

*9 According to ASTM D1790 ($kg/cm^2$)

*10 A square plate (thickness: 3 mm; width: 12 cm, length: 12 cm) was injection-molded (temperature of resin: 300°C), and the appearance was judged visually.

Examples 43 to 56 and Comparative Examples 21 5o 25

The polycarbonate resins and rubber-like elastomer and other additives such as glass fiber each in the prescribed amount shown in Table 6 were pre-kneaded in a drum tumbler, supplied into an extruder, and kneaded at the temperature of 280° C. The resulting polycarbonate resin composition was pelletized.

The pellets thus obtained were injection-molded at a molding temperature of 280° C and at a die temperature of 80° C to obtain test pieces.

The test pieces were measured for tensile strength, Izod impact strength, flow value and flame retardance (inflammability).

The results are shown in Table 6.

Table 6

| Run No. | Polycarbonate Kind | Polycarbonate Amount Blended (wt%) | Rubber-like Elastomer Kind | Rubber-like Elastomer Amount Blended (wt%) | Other Additives Kind | Other Additives Amount Blended *13 | Tensile Strength *14 (kg/cm²) | Izod Impact Strength *15 (kg·cm/cm²) | Flow Value *16 (ml/sec) | Flame Retardance *17 |
|---|---|---|---|---|---|---|---|---|---|---|
| Example 43 | PC-1 | 90 | (a) *2 | 10 | - | - | 630 | 60 | $8.0 \times 10^{-2}$ | V-2 |
| Example 44 | PC-1 | 80 | (a) | 20 | - | - | 500 | 65 | $9.0 \times 10^{-2}$ | V-2 |
| Example 45 | PC-1 | 90 | (a) | 10 | - | - | 610 | 65 | $8.5 \times 10^{-2}$ | V-2 |
| Example 46 | PC-1 | 70 | (c) *4 | 30 | - | - | 450 | 80 | $11.0 \times 10^{-2}$ | V-2 |
| Example 47 | PC-2 | 90 | (d) *5 | 10 | - | - | 620 | 65 | $9.0 \times 10^{-2}$ | V-2 |
| Example 48 | PC-2 | 80 | (b) *3 | 20 | - | - | 520 | 70 | $9.5 \times 10^{-2}$ | V-2 |
| Example 49 | PC-2 | 95 | (a) | 5 | - | - | 700 | 55 | $7.5 \times 10^{-2}$ | V-2 |
| Example 50 | PC-1 | 95 | (e) *6 | 5 | - | - | 680 | 60 | $10.0 \times 10^{-2}$ | V-2 |
| Example 51 | PC-1 | 95 | (f) *7 | 5 | - | - | 690 | 55 | $12.0 \times 10^{-2}$ | V-2 |
| Example 52 | PC-2 | 95 | (g) *8 | 5 | - | - | 680 | 50 | $9.0 \times 10^{-2}$ | V-2 |
| Example 53 | PC-1 | 90 | (h) *9 | 10 | - | - | 630 | 70 | $8.5 \times 10^{-2}$ | V-2 |
| Example 54 | PC-1 | 95 | (a) | 5 | Lubricant *10 | 0.5 | 690 | 50 | $9.0 \times 10^{-2}$ | V-2 |
| Example 55 | PC-2 | 90 | (d) | 10 | GF *11 | 10 | 1050 | 20 | $4.0 \times 10^{-2}$ | V-2 |
| Example 56 | PC-1 | 90 | (b) | 10 | Flame *12 retarder | 5 | 650 | 50 | $7.5 \times 10^{-2}$ | V-0 |
| Comparative Example 21 | PC-3 *1 | 100 | - | - | - | - | 750 | 20 | $5.9 \times 10^{-2}$ | V-2 |
| Comparative Example 22 | PC-1 | 100 | - | - | - | - | 710 | 18 | $6.4 \times 10^{-2}$ | V-0 |
| Comparative Example 23 | PC-3 | 90 | (a) | 10 | - | - | 600 | 65 | $6.5 \times 10^{-2}$ | HB |
| Comparative Example 24 | PC-1 | 30 | (c) | 70 | - | - | 300 | 90 | $16.0 \times 10^{-2}$ | HB |
| Comparative Example 25 | PC-2 | 100 | - | - | GF | 10 | 1100 | 7 | $2.5 \times 10^{-2}$ | V-0 |

*1 Toughlon A-2200 (polycarbonate from bisphenol A and phosgene) manufactured by Idemitsu Petrochemical Co., Ltd.

*2 Paraloid KM 330 (acrylic rubber) manufactured by Rohm & Haas Co., Ltd., USA

*3 HI-BLEN B611 (acrylic rubber) manufactured by Nippon Zeon Co., Ltd.

*4 HIA-15 (acrylic rubber) manufactured by KUREHA CHEMICAL INDUSTRY CO., LTD.

*5 METABLEN W 529-X (acrylic rubber) manufactured by Mitsubishi Rayon Co., Ltd.

*6 BUTYL 268 (butyl rubber) manufactured by Japan Synthetic Rubber Co., Ltd.

*7 EP 57P (ethylene-propyrene-dienerubber) manufactured by Japan Synthetic Rubber Co., Ltd.

*8 Kaliflex TR 1101 (styrene-butadiene-styrene rubber) manufactured by Shell Chemicals Co., Ltd.

*9 HI-BLEN B601 (acrylic rubber) manufactured by Nippon Zeon Co., Ltd.

*10 Rikemal S 100 A (Stearic acid monoglyceride) manufactured by Riken Vitamin Co., Ltd.

*11 MA 409C (glass fiber, diameter : 13μ, length : 6 mm) manufactured by Asahi Fiber Glass Co., Ltd.

*12 BC-58 (polycarbonate oligomer produced form TBA and phosgene) manufactured by Great Lakes, Ltd.

*13 Shown by parts by weight to 100 parts by weight in total amount of polycarbonate and rubber-like elastomer

*14 According to JIS K 7113

*15 According to ASTM D 256 (thickness : 3.2 mm, measured at -20°C)

*16 According to JIS K 7210 (measured at 280°C)

*17 According to UL 94 (1/16 inch in thickness)

Examples 57 to 62 and Comparative Examples 26 to 29

Novel polycarbonate resins and commercially available aromatic polycarbonate resins obtained from bisphenol A shown in Table 7 in prescribed amount are pre-kneaded in a drum tumbler, supplied into an extruder, and kneaded at the temperature of 280°C. The resulting polycarbonate resin composition was pelletized.

The pellets thus obtained were injection-molded at molding temperature of 280°C and a die temperature of 80°C to obtain test pieces. The test pieces were measured for stiffness modulus, flame retardance and Izod impact strength.

The results are shown in Table 7.

Table 7

| Run No. | Composition (parts by weight): Component (a) kind | Component (a) Ratio | Component (b)*2 Ratio | Others Kind | Others Ratio | Evaluation: Izod*4 Impact value (kg·cm/cm²) | Stiffness*5 modulus (kg/cm ) | Flow*6 value (ml/sec) | Flame*7 Retardance |
|---|---|---|---|---|---|---|---|---|---|
| Example 57 | PC-1 | 20 | 80 | - | - | 90 | 25,300 | $5.9 \times 10^{-2}$ | V-0 |
| Example 58 | PC-1 | 50 | 50 | - | - | 88 | 25,500 | $6.0 \times 10^{-2}$ | V-0 |
| Example 59 | PC-1 | 70 | 30 | - | - | 86 | 25,700 | $6.0 \times 10^{-2}$ | V-0 |
| Example 60 | PC-2 | 90 | 10 | - | - | 80 | 25,700 | $6.1 \times 10^{-2}$ | V-0 |
| Example 61 | PC-2 | 70 | 30 | - | - | 85 | 25,600 | $6.2 \times 10^{-2}$ | V-0 |
| EXample 62 | PC-1 | 20 | 80 | GF*3 | 20 | 20 | 60,000 | $3.2 \times 10^{-2}$ | V-0 |
| Comparative Example 26 | - | - | 100 | - | - | 95 | 25,000 | $5.9 \times 10^{-2}$ | V-2 |
| Comparative Example 27 | NB2500*1 | 70 | 30 | - | - | 12 | 26,000 | $4.0 \times 10^{-2}$ | V-0 |
| Comparative Example 28 | PC-2 | 100 | 0 | - | - | 70 | 26,200 | $6.5 \times 10^{-2}$ | V-0 |
| Comparative Example 29 | NB2500 | 30 | 70 | - | - | 11 | 25,800 | $4.5 \times 10^{-2}$ | V-2 |

*1 NB 2500 ... Polycarbonate from tetrabrombisphenol A, trade name: Toughlon NB-2500 manufactured by Idemitsu Petrochemical Co., Ltd.

*2 Component (b) .. Polycarbonate from bisphenol A, trade Name: Toughlon A-2200 manufactured by Idemitsu Petrochemical Co., Ltd.

*3 GF Glass fiber, trade name: MA 409 C manufactured by Asahi Fiber Glass Co., Ltd. (diameter : 13 μ , length: 3 mm)

*4 According to JIS K 7,110 (1/8 inch in thickness, notched, measured at 23°C)

*5 According to JIS K 7,203

*6 According to JIS K 7,210 (temperature: 280°C, load: 160 kg)

*7 According to UL 94 (1/16 in thickness)

## Claims

1. A polycarbonate resin composition containing, as major components, a polycarbonate resin having a repeating unit (I) represented by the formula (A) shown below and a repeating unit (II) represented by the formula (B) shown below, a pentahalogenophenoxy group at the terminal thereof, and a viscosity average molecular weight of at least 5,000, and thermoplastic resin.

Formula (A)

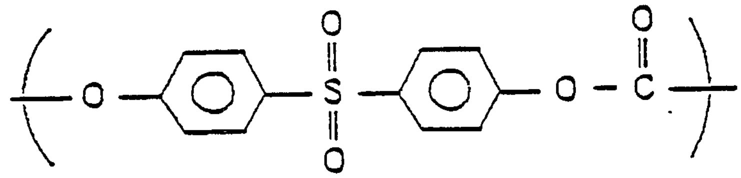

· · (A)

Formula (B)

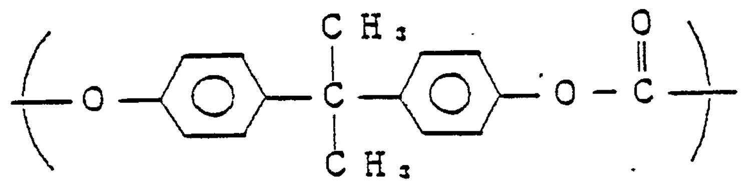

· · (B)

2. The composition as claimed in Claim 1, wherein the thermoplastic resin is one or more resins selected from the group consisting of styrene-based resin, polyamide resin, polyolefin resin, fluorine resin, rubber-like elastomer, aromatic polycarbonate resin, and thermoplastic polyester resin.

3. The composition as claimed in Claim 2, containing the polycarbonate resin and styrene-based resin as the major components, the proportion of the polycarbonate resin in the polycarbonate resin/styrene-based resin mixture being 1 to 99% by weight.

4. The composition as claimed in Claim 2, containing the polycarbonate resin and polyamide resin as the major components, the proportion of the polycarbonate resin in the polycarbonate resin/polyamide resin mixture being 30 to 99% by weight.

5. The composition as claimed in Claim 2, containing the polycarbonate resin and polyolefin resin as the major components, the proportion of the polycarbonate resin in the polycarbonate resin/polyolefin resin mixture being 50 to 99% by weight.

6. The composition as claimed in Claim 2, containing the polycarbonate resin and fluorine resin as the major components, the proportion of the polycarbonate resin in the polycarbonate resin/fluorine resin mixture being 60 to 99% by weight.

7. The composition as claimed in Claim 2, containing the polycarbonate resin and rubber-like elastomer as the major components, the proportion of the polycarbonate resin in the polycarbonate resin/rubber-like elastomer being 40 to 99% by weight.

8. The composition as claimed in Claim 2, containing the polycarbonate resin and aromatic polycarbonate resin as the major components, the proportion of the polycarbonate resin in the polycarbonate resin/aromatic polycarbonate resin mixture being 1 to 99% by weight.

9. The composition as claimed in Claim 2, containing the polycarbonate resin and thermoplastic polyester resin as the major components, the proportion of the polycarbonate resin in the polycarbonate resin/thermoplastic polyester resin mixture being 1 to 99% by weight.